# EUROPÄISCHE PATENTSCHRIFT

(11) **EP 3 760 392 B1**
(45) Veröffentlichungstag und Bekanntmachung des Hinweises auf die Patenterteilung: **13.09.2023**
(21) Anmeldenummer: 20183854.7
(22) Anmeldetag: 03.07.2020
(51) Int. Cl.: B25J 9/16

(54) **VERFAHREN UND SYSTEM ZUR PRÜFUNG UND/ODER MONTAGE EINES OBJEKTS MITTELS EINES ROBOTERS**
METHOD AND SYSTEM FOR INSPECTING AND / OR MOUNTING AN OBJECT USING A ROBOT
PROCÉDÉ ET SYSTÈME D'ESSAI ET/OU DE MONTAGE D'UN OBJET AU MOYEN D'UN ROBOT

(30) Priorität: 03.07.2019 DE 102019118002
(43) Veröffentlichungstag der Anmeldung: 06.01.2021
(73) Patentinhaber: Battenberg, Günther, 35274 Kirchhain (DE)
(72) Erfinder: Battenberg, Günther, 35274 Kirchhain (DE)
(74) Vertreter: Stoffregen, Hans-Herbert

(56) Entgegenhaltungen:
- EP-A2- 2 216 144
- WO-A1-2018/176025
- DE-A1- 10 357 413
- US-A1- 2019 171 190

## Beschreibung

Die Erfindung bezieht sich auf ein Verfahren zur Prüfung und/oder Montage zumindest eines Bauteils und/oder zumindest einer Funktionseinheit nach dem Oberbegriff des Anspruchs 1.

Ein Verfahren und ein System der eingangs genannten Art ist aus der WO 2018/176025 A1 bekannt. Beschrieben wird ein "world model", welches eine Vielzahl von Datenobjekten enthält, die für physische Objekte im System repräsentativ sind, eine Vielzahl von Datenobjekten, die für Umgebungsqualitäten des Systems repräsentativ sind, eine Vielzahl von Datenobjekten, die für Arbeitsobjekte repräsentativ sind, auf die von den physischen Objekten eingewirkt wird und eine Vielzahl von Datenobjekten, die für funktionale Beziehungen zwischen den physischen Objekten und den Objekten, auf die die physischen Objekte einwirken, repräsentativ sind. Das System weist ferner einen autonomen Prozess auf, der so konfiguriert ist, dass er Informationen von der Vielzahl von Datenobjekten empfängt und Schlussfolgerungen durchführt, um ein gewünschtes Verhaltenssystem auszuwählen. Ferner ist vorgesehen, dass der autonome Prozess zumindest eine Eigenschaft von mindestens einem Datenobjekt als Reaktion auf das ausgewählte gewünschte Verhalten ändert.

Die DE 103 57 413 A1 betrifft ein Verfahren und Anordnung zur Simulation von Einbausituationen für komplexe Produkte. Es ist vorgesehen, dass mittels eines CAD-Systems 3D-Geometriedaten erzeugt oder auf Basis von Konstruktionsdaten gefertigte Bauteile vermessen, aus wenigstens einem Teil der direkt aus der computergestützten Bauteilkonstruktion oder der aus der Vermessung von Bauteilen gewonnenen Messdaten Modelle für die computergestützte Konstruktion/Berechnung der Bauteile, wie beispielsweise FEM-Modelle, generiert, die aus CAD-Daten oder den Messdaten generierten Modelle mit Einsatzmodellen beaufschlagt werden, wobei die Ersatzmodelle Verbindungseigenschaften der Bauteile innerhalb von Zusammenbauten und/oder Wirkungen von äußeren Krafteinflüssen auf die Bauteile modellieren.

Die EP 2 216 144 A2 betrifft ein Verfahren zur Fertigung, Montage und/oder Kontrolle von Bauteilen mittels einer Prüfvorrichtung, die auch Montageaufgaben erledigen könnte, anhand definierter Prüfaufgaben, wobei jedes Bauteil mittels eines CAD-Systems erstellt wird.

Beim Erstellen eines Bauteils im CAD-System wird eine dem Bauteil zugeordnete Prüfaufgabe definiert, wobei jede Prüfaufgabe in einem virtuellen Funktionsraum definiert wird. Ferner können jeder Prüfaufgabe Qualitätsmerkmale sowie Analyse- oder Bewertungskriterien sowie Stör- und Fehlergrößen zugeordnet werden. Aus jeder Prüfaufgabe werden Handlungsweisen, Referenzbahnen und/oder Referenzpunkte für die Prüfvorrichtung abgeleitet und dem virtuellen Funktionsraum zugeordnet. Anschließend wird jede Prüfaufgabe vor der Ausführung in einem realen Funktionsraums in dem jeweils zugeordneten virtuellen Funktionsraum simuliert.

Die DE 10 2011 111 187 A1 betrifft ein Montagesystem und -verfahren, insbesondere zur Montage von Kraftfahrzeugen mit wenigstens einer Montagestation, die zur Ausführung wenigstens eins Montageschritts vorgesehen ist, wobei das Montagesystem wenigstens ein Simulationsmittel aufweist, welches an einer Montagestation oder in einem dieser benachbarten Zimmer angeordnet ist, wobei wenigstens ein Montageschritt durch ein Simulationsmittel des Montagesystems virtuell simuliert und der vorab simulierte Montageschritt durch einen Montagewerker real ausgeführt wird.

Bei den aus dem Stand der Technik bekannten klassischen digitalen Versuchsmodellen (Digital Mock-Up) von Bauteilen ist es bisher nicht möglich, physikalische Wirk- und/oder Funktionsmechanismen, wie Kraft-Weg-Beziehungen, Drehmoment-Winkel-Beziehungen oder Fügekräfte in eine Simulation mit einzubeziehen. Folglich können auch Montagezeiten für Bauteile und Prüfzeiten von Funktionsprüfungen bisher nicht simuliert werden.

Davon ausgehend liegt der vorliegenden Erfindung die Aufgabe zugrunde, ein Verfahren und ein System der eingangs genannten Art derart weiterzubilden, dass die Prüf- und/oder Montageschritte unter Berücksichtigung von Bedien- und Montagekräften auf einfache Weise parametrisiert, simuliert, frühzeitig getestet und optimiert werden können. Insbesondere soll die Möglichkeit bestehen, Prüf-, Takt- und Montagezeiten abzuschätzen und zu optimieren. Ferner sollen Prototypen mit neuem Verhalten simuliert werden können.

Die Aufgabe wird gemäß der Erfindung durch die Merkmale des Anspruchs 1 gelöst. In dem digitalen Modell des zumindest einen Bauteils und/oder der zumindest einen Funktionseinheit wird für zumindest einen Prüf- und/oder Montageschritt ein Verhaltensmodell berücksichtigt wird, welches bei der Ausführung des Prüf- und/oder Montageschritts in dem realen Raum auftretende physikalische Wirk- und/oder Funktionsmechanismen insbesondere in Form von Bedien- und/oder Montagekräften abbildet.

Das Verhaltensmodell ist ein mathematisch physikalisches Verhaltensmodell, durch das ein physikalisches und/oder dynamisches Verhalten des zumindest einen Bauteils und/oder der zumindest einen Funktionseinheit bei Durchführung der Prüf- und/oder Montagschritte mittels zumindest einer mathematische Beziehung, wie mathematische Gleichung beschrieben wird.

Die mathematische Beziehung wird in Form einer Kurve oder Kennlinie zumindest einer physikalischer Größen, wie Kraft oder Drehmoment, in Abhängigkeit einer weiteren Größe, wie Weg, Winkel oder der Zeit in Form insbesondere einer Kraft-Weg-Kennlinie oder Drehmoment-Winkel-Kennlinie, vorgegeben.

Das funktionale digitale Modell des zumindest einen Bauteils und/oder der zumindest einen Funktionseinheit ist Basis für die ganzheitliche Produktentwicklung in der virtuellen Welt, damit möglichst alle daraus ableitbaren Daten direkt in reale Produktionsprozesse übernommen werden können.

Im Gegensatz zum aktuellen Digital-Engineering bietet das erfindungsgemäße Verfahren die Möglichkeit, funktionale, physikalische Verhaltensmodelle für insbesondere Prüfprozesse der Qualitätssicherung abzubilden.

Mit dem funktionalen digitalen Modell des zumindest einen Bauteils und/oder der zumindest einen Funktionseinheit wird erstmalig virtuelles Prüfen von virtuellen, funktionalen Bauteilen und/oder Funktionseinheiten wie Interieur-Komponenten ermöglicht.

Mit dem erfindungsgemäßen Verfahren besteht die Möglichkeit, bereits vor dem Entstehen eines Prototyps und Endproduktes virtuell Prüfspezifikationen abzubilden und Prüfabläufe zu programmieren.

In dem digitalen Modell des zumindest einen Bauteils und/oder der zumindest einen Funktionseinheit verschmelzen hier ein CAD-Modell, ein Simulationsmodell sowie die mathematischen Verhaltensmodelle zu einem computerausführbaren funktionalen digitalen Modell als virtueller Prototyp, das reale, physische Funktionen und das dynamische Verhalten der Wirk- und/oder Funktionsmechanismen abbildet.

In einem virtuellen Prototypen-Designprozess wird mittels des funktionalen digitalen Modells das reale physische, funktionale Produktverhalten z. b. einer Interieur-Komponente, wie Klimabediengerät, simuliert. Zudem sind die Funktions- und Prüfspezifikationen parametrisierbar, simulierbar und frühzeitig testbar.

Das Verhaltensmodell wird bei der Simulation der Prüf- und/oder Montageschritte abgerufen, so dass Prüf- und/oder Montagespezifikationen angepasst werden können.

Ein Verlauf der Kurve oder Kennlinie wird mittels eines Kurven-Editors eingestellt.

Die mathematische Beziehung kann mittels eines Translators in das mathematische Verhaltensmodell transformiert und mittels eines Lösungsalgorithmus gelöst werden.

Erfindungsgemäß wird der Kurven-Editor bei der Simulation eines der Prüf- und/oder Montageschritte angezeigt, so dass die Kurven mittels des Kurven-Editors iterativ angepasst und anschließend die Simulation neu gestartet werden kann.

Das zumindest eine Bauteil ist vorzugsweise eine Komponente für den Einbau in ein Kraftfahrzeug ist, wie Bediengerät für eine Klimaanlage, Rücklicht oder Türe. Die zumindest eine Funktionseinheit ist insbesondere eine elektromechanische Komponente wie ein Taster, ein Drehknopf, ein Drehregler oder ein Schieberegler.

Bei der Simulation der Montageschritte wird insbesondere das physikalische und dynamische Verhalten des zumindest einen Bauteils simuliert, insbesondere ein Verlauf von Füge- oder Montagekräften, die bei der Montage des Bauteils in eine Aussparung auftreten. Vorzugsweise wird bei der Simulation der Prüfschritte das physikalische dynamische Verhalten der zumindest einen Funktionseinheit bei Ausführung simuliert, insbesondere ein Kraftverlauf beim Drücken einer Taste, ein Drehmomentverlauf beim Drehen eines Drehkopfes oder eines Drehreglers.

Bei einer weiteren bevorzugten Verfahrensweise kann das funktional physikalisch dynamische Verhalten des zumindest einen Bauteils und/oder der zumindest einen Funktionseinheit mittels des Roboters real gemessen werden, wobei die real gemessenen Werte in dem mathematischen Verhaltensmodell berücksichtigt wie eingespeist werden. Des Weiteren ist erfindungsgemäß vorgesehen, dass die im virtuellen Raum generierten und optimierten Prüf- und/oder Montageschritte in den realen Raum insbesondere die reale Messrobotik übertragen werden, wobei real abgeleitete Daten, Qualitätsergebnisse, Fehler und/oder Wartungsmeldungen in dem funktionalen digitalen Modell evaluiert werden. Das funktionale digitale Modell des zumindest einen Bauteils und/oder der zumindest einen Funktionseinheit wird aus Daten eines CAD-Modells, Daten eines kinematischen Simulationsmodells und Daten der mathematischen Verhaltensmodelle erstellt. Die Prüf- und Montageschritte bestehen aus Komponenten, deren physikalisches, dynamisches Verhalten durch das mathematische Verhaltensmodell abgebildet wird.

Ferner betrifft die Erfindung ein System, das zur Durchführung des erfindungsgemäßen Verfahrens angepasst ist, mit einem Roboter wie Prüf- und/oder Montageroboter, mit wenigstens einer Messsensorik und/oder einer Greif- und/oder Montageeinrichtung, einem Steuergerät zur Steuerung des Roboters zur Durchführung der Prüf- und/oder Montageschritte in einem realen Raum sowie gegebenenfalls einer Schnittstelleneinheit zur Kopplung mit dem vorzugsweise von einer Modellierungs- und/oder Simulationseinrichtung vorgegebenen virtuellen Raum bzw. virtuellen Zelle.

Kern der Erfindung ist auch eine Modellierungs- und Simulationsumgebung bzw.-einrichtung für die Wirk- und/oder Funktionsmechanismen der Bauteile und/oder der Funktionseinheiten.

Es zeigen:
- Fig. 1: ein zu fertigendes und zu montierendes und/oder zu prüfendes Bauteil mit Funktionseinheiten sowie ein daraus abgeleitetes funktionales digitales Modell für ein virtuelles Bauteil,
- Fig. 2: eine virtuelle Prüf- und/oder Montagezelle mit virtueller Messrobotik und virtuellem Bauteil,
- Fig. 3: eine bidirektionale Kopplung zwischen der virtuellen Prüf- und/oder Montagezelle gern. Fig. 3 und einer realen Messrobotik und
- Fig. 4: eine schematische Darstellung eines Verfahrens zur Simulation und Optimierung eines Messablaufs unter Berücksichtigung von Spezifikationen und Funktionsmechanismen des Bauteils und der Funktionseinheiten des Bauteils.

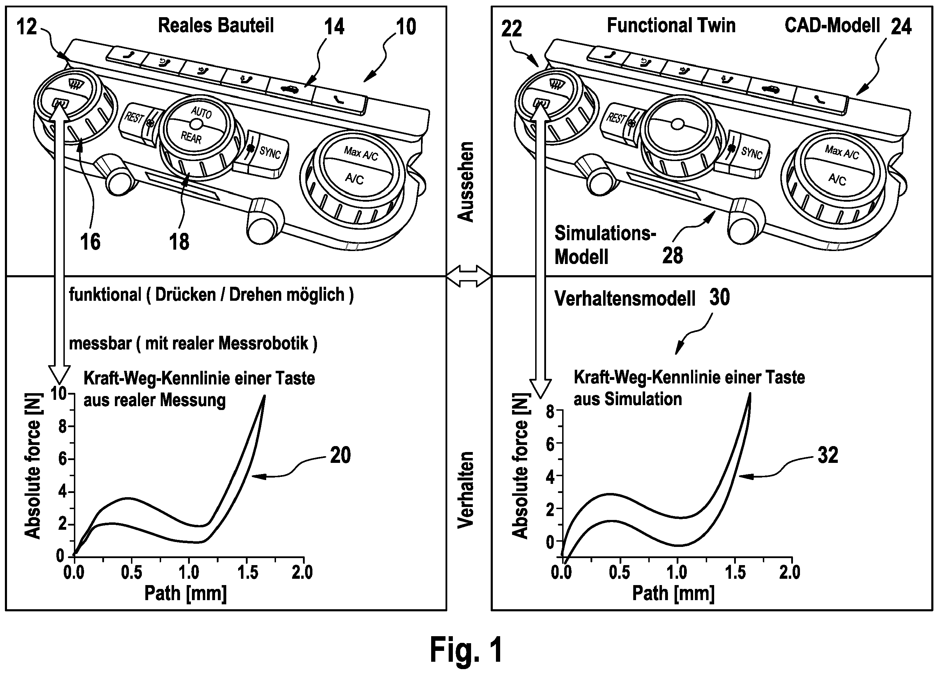

Fig. 1 zeigt rein schematisch ein reales Bauteil 10 wie z. B. ein Bediengerät für eine Klimaanlage, welches für den Einbau in ein Kraftfahrzeug (nicht dargestellt) vorgesehen ist. Das Bauteil 10 umfasst ein Gehäuse 12 und eine Vielzahl von Funktionseinheiten wie Taster 14, Drehregler 16 und Drehschalter 18.

Bei einer realen Montage des Bauteils 10 oder der Prüfung der Funktionseinheiten 12, 16, 18 treten Wirk- und/oder Funktionsmechanismen 20 in Form von physikalischen Größen wie Fügekräften, Druckkräften oder Drehmomenten auf, die in Fig. 1 für z. B. den Taster 14 rein schematisch als Kraft-Weg-Kennlinie dargestellt sind. Die Kraft-Weg-Kennlinie ist aus einer realen Messung der Kraft beim Drücken der Taste 14 und wiederloslassen der Taste 14 mittels einer Messrobotik aufgenommen worden.

Damit entsprechende Wirk- und/oder Funktionsmechanismen 20 bei der Simulation von Prüf- und/oder Montageschritten simuliert werden können, wird für das zu fertigende, zu montierende und/oder zu prüfende Bauteil 10 mittels einer Modellierungs- und Simulationseinrichtung wie Computer (nicht dargestellt) ein funktionales digitales Modell 22 erstellt. Das funktionale digitale Modell 22 umfasst Daten eines CAD-Modells 24 zur Visualisierung eines virtuellen Bauteils 26 sowie Daten eines geometrischen, kinematischen Simulationsmodells 28 der beweglichen Funktionseinheiten wie Taster 14, Drehschalter 16 sowie Drehregler 18.

Gemäß der Erfindung ist vorgesehen, dass das funktionale digitale Modell 22 des Bauteils 10 ergänzend zu den Daten des CAD-Modells 24 und den Daten des Simulationsmodells 28 Daten eines mathematischen Verhaltensmodells 30 umfasst. Durch das mathematische Verhaltensmodell 30 wird das physikalische und dynamische Verhalten des Bauteils 10 und der Funktionseinheiten 14 ... 18 während eines Prüf- und/oder Montageschrittes abgebildet. Das physikalisch dynamische Verhalten des Bauteils 10 und der Funktionseinheiten 14 ... 18 wird mittels zumindest einer mathematischen Beziehung 32 beschrieben, die im dargestellten Ausführungsbeispiel als Kraft-Weg-Kennlinie dargestellt ist. Die zumindest eine mathematische Beziehung 32 wird mittels eines Translators (nicht dargestellt) in das mathematische Verhaltensmodell 30 übersetzt und mittels eines Lösungsalgorithmus gelöst. Zur Modellierung des mathematischen Verhaltensmodells 30 können an sich bekannte Modellierungssprachen wie Modellica (eingetragene Marke) und Dymola (eingetragene Marke) verwendet werden.

Das funktionale digitale Modell 22 ermöglicht eine einfache Entwicklung von Prototypen, da das physikalische Verhalten des Modells frei parametrisiert werden kann.

Für einen Entwickler bzw. Designer des Bauteils 10 und der Funktionseinheiten 14... 18 kann das funktionale digitale virtuelle Modell 22 benutzt werden, um Designvorgaben in dem CAD-Modell 24 und Lastenheftvorgaben bzw. Spezifikationen z. B. für auftretende Kontaktkräfte und Drehmomente festzulegen. Das CAD-Modell 24 mit starren und beweglichen Bauelementen wird für die Kinematik des funktionalen digitalen Modells 22 und somit für die geometrische Simulation benötigt. Fügt der Designer zusätzliche Elemente innerhalb des Bauteils hinzu, werden diese mittels des CAD-Modells 24 mitberücksichtigt.

Die Lastenheftvorgaben bzw. Spezifikationen der einzelnen Funktionen werden benötigt, um das physikalische Verhalten zu modellieren. Dabei kann der Entwickler einen Kurvengenerator mit freidefinierbaren Stützstellen verwenden, um die Messkurve 32 zu optimieren oder eine ideale Messkurve in dem funktionalen digitalen Modell 22 zu hinterlegen.

Es können auch parametrisierbare analytische Modelle aus einer Datenbank ausgewählt werden, um das physikalische Verhalten des funktionalen digitalen Modells 22 zu definieren. Vorkonfigurierte funktionale digitale Modelle stehen ebenfalls zur Verfügung. Um die funktionalen digitalen Modelle 22 zu verfeinern, können Messungen am realen Bauteil 10 durchgeführt werden, um somit freie Parameter des funktionalen digitalen Modells 22 festzulegen.

Als Mehrwert enthält der Entwickler durch das funktionale digitale Modell 22 eine realistische Abschätzung der Prüfzeiten für die weitere Anlagenplanung und Kostenkalkulation.

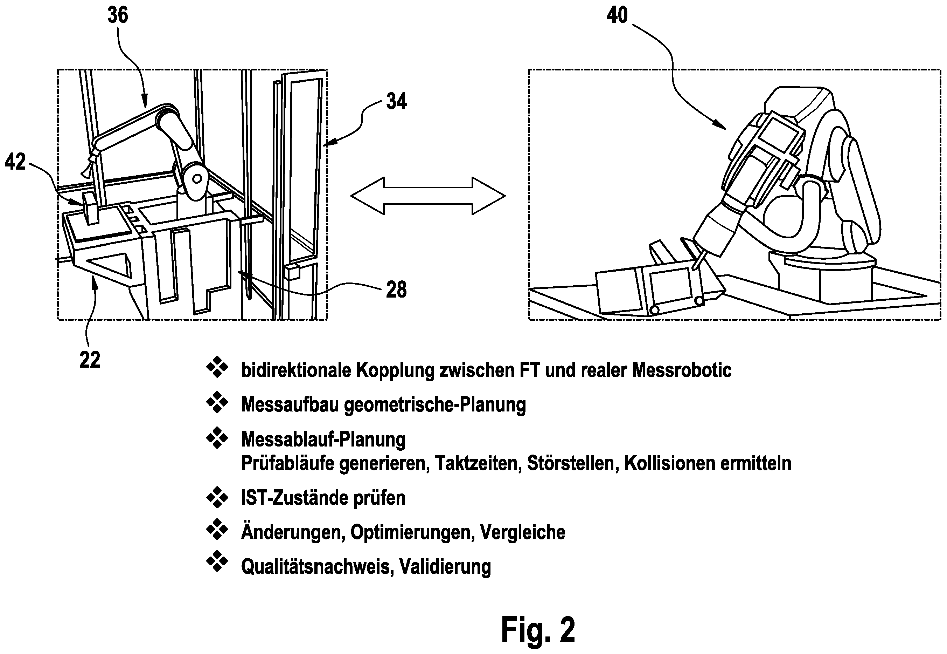

Das funktionale digitale Modell 22 des Bauteils und der Funktionseinheiten, das einem funktionalen digitalen Zwilling des Bauteils und der Funktionseinheiten entspricht, ist die Basis für eine ganzheitliche Produktentwicklung in der virtuellen Welt, um möglichst alle daraus ableitbaren Daten direkt in reale Produktionsabläufe übernehmen zu können. Anhand des funktionalen digitalen Modells 22 können reale Prüf- und/oder Montageschritte des Bauteils 10 und/oder der Funktionseinheiten 14... 18 in einer virtuellen Zelle 34 als virtueller Raum simuliert werden, die in Fig. 2 dargestellt ist.

Die virtuelle Zelle 34 umfasst eine virtuelle Messrobotik 36, d.h. ein funktionales digitale Modell 38 eines realen Roboter wie Messrobotik-Systems 40, mittels dem Prüf- und/oder Montageschritte an einem virtuellen Bauteil 42, welches durch das funktionale digitale Modell 22 repräsentiert ist, simulierbar sind.

Dabei ist hervorzuheben, dass im Gegensatz zum klassischen digitalen Versuchsmodell (Digitalen Mock-Up) die physikalischen Wirk- und/oder Funktionsmechanismen 20 durch das Verhaltensmodell 30 in die Simulation miteinbezogen werden. So werden z. B. auftretende Bedien- oder Montagekräfte virtuell simuliert.

In Verbindung mit der virtuellen Messrobotik 36 des realen Messrobotik-Systems 40 werden Prüfspezifikationen und Prüfabläufe virtuell programmierbar, lange vor dem Entstehen eines realen Prototyps.

Als virtueller Prototyp verschmelzen im dem funktionalen digitalen Modell 22 des Bauteils 10 und der Funktionseinheiten 14... 18 die Daten des CAD-Modells 24, die Daten des geometrischen kinematischen Simulationsmodells 28 und die Daten des mathematischen Verhaltensmodells 30 zu einem digitalen Modell, das reale, physische Funktionen und das dynamische Verhalten der Wirk- und/oder Funktionsmechanismen des Bauteils und der Funktionseinheiten abbildet.

Folglich transformiert das funktionale digitale Modell 22 die realen Prüf- und/oder Montageschritte in den virtuellen Raum und generiert damit in der gesamten Produktwertschöpfungskette ein großes Potential an Zeit- und Kostenersparnis.

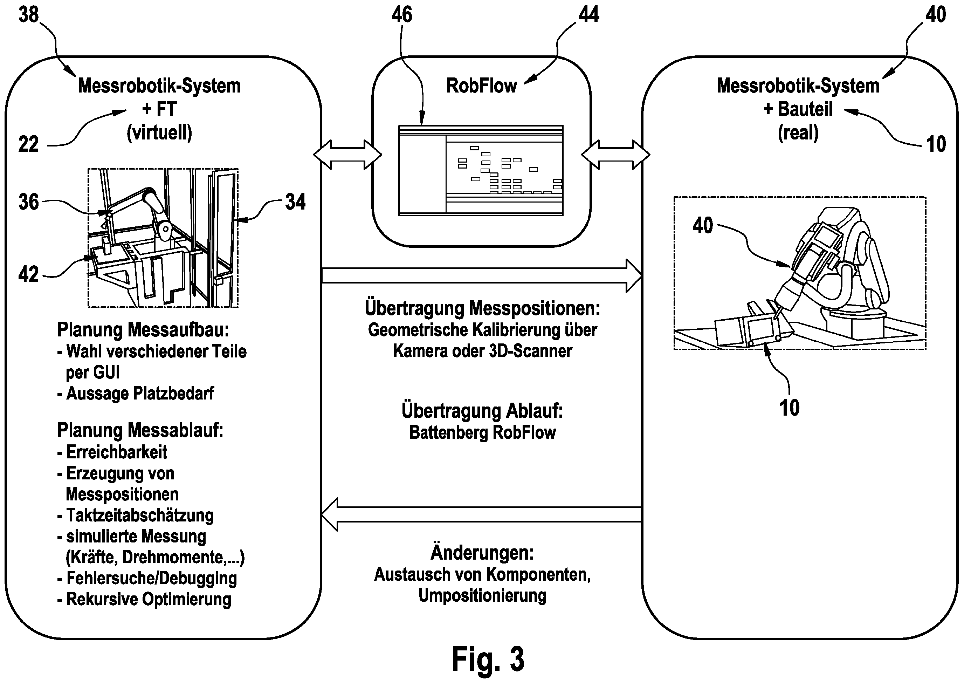

Fig. 3 zeigt eine bidirektionale Kopplung zwischen der virtuellen Zelle 34 und des realen Messrobotik-Systems 40 in Form eines Cyber-physischen-Systems. Das System ist zur Durchführung des Verfahrens angepasst und umfasst den Prüf- und/oder Montageroboter in Form des Messrobotik-Systems 40, mit wenigstens einer Prüf- und/oder Mess-Sensorik und/oder einer Greif- und/oder Montageeinrichtung, einem Steuergerät zur Steuerung des Prüf- und/oder Montageroboters zur Durchführung der Prüf- und/oder Montageschritte in einem realen Raum sowie gegebenenfalls einer Schnittstelleneinheit 44 zur Kopplung mit dem vorzugsweise von einer Modellierungs- und/oder Simulationseinrichtung erzeugten virtuellen Raum bzw. virtuellen Zelle 34.

Das funktionale digitale Modell 38 der Messrobotik 40 sowie das funktionale digitale Modell 22 des Bauteils 10 werden bei der Prozessplanung eingesetzt um Prozessabläufe zu optimieren und Taktzeiten zu ermitteln.

Für einen Versuchsingenieur, der mit dem realen Messrobotik-System 40 die Bauteilmessungen durchführt, bietet das funktionale digitale Modell 22, 38 eine Vielzahl von weiteren Vorteilen.

Mit dem funktionalen digitalen Modell 22 des Bauteils und einer vorhandenen Datenbank wird das funktionale digitale Modell 38 der realen Messrobotik 40 inklusive Roboter, Sensor, Tool-Werkzeuge und Einhausung generiert. Die Wahl der verschiedenen Komponenten kann mittels einer grafischen Benutzerschnittstelle 44 eines Software-Tools 46 erfolgen.

Sind das funktionale digitale Modelle 22 des Bauteils und das funktionale digitale Modell 38 der Messrobotik 40 vorhanden, kann die Simulation gestartet werden.

In der Simulation können Prüfabläufe geplant und dynamisch in 3D dargestellt werden. Dies kann klassisch an einem Bildschirm oder auch in der virtuellen Welt mit Augmented- oder Virtual-Reality-Brillen erfolgen.

So kann untersucht werden, ob alle Messpunkte im Arbeitsbereich des Roboters und gegebenenfalls zusätzlicher Linearachsen erreichbar sind. Zudem wird klar, ob unerwünschte Kollisionen des Roboters mit seiner Umgebung auftreten können. Der Prüfablauf ist einfach optimierbar und die Taktzeit kann abgeschätzt werden.

Nach Fertigstellung der Prüfabläufe kann die Simulation, wie virtuell generierte Prüffunktionen, mittels des Software-Tools 46 in das reale Messrobotik-System 40 übertragen werden, so dass der reale Messroboter 40 die geplante Prüfung am echten Bauteil 10 durchführen kann. Dabei können real ableitbare Daten, Qualitätsergebnisse aus dem Prüfprozess, Fehler und Wartungsmeldungen in dem funktionalen digitalen Modell 22 evaluiert werden. Das Framework des funktionalen digitalen Modells 22 ist flexibel und branchenunabhängig auf viele Produkte anwendbar.

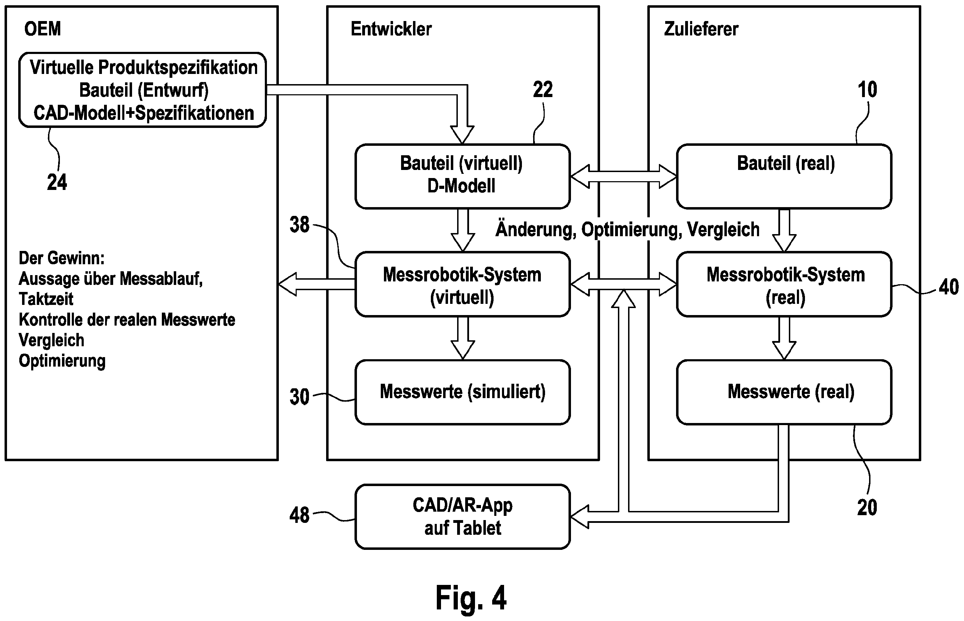

Fig. 4 zeigt rein schematisch einen Verfahrensablauf für die ganzheitliche Produktentwicklung in der virtuellen Welt, um möglichst alle daraus ableitbaren Daten direkt in reale Produktionsabläufe übernehmen zu können. Reale Prüfschritte werden anhand des virtuellen Bauteils in der virtuellen Zelle 34 simuliert.

Der Entwickler erhält von einem Erstausrüster virtuelle Produktspezifikationen des Bauteils 10 in Form der Daten des CAD-Modells 24 und weiteren Spezifikationen bzw. Lastenheftvorgaben z.B. für auftretende Kontaktkräfte und Drehmomente.

Aus den Daten erstellt der Entwickler das funktionale digitale Modell 22 des realen Bauteils, welches durch Vergleich mit dem realen Bauteil 10 eines Zulieferers geändert und optimiert werden kann.

Mittels des virtuellen Messrobotik-Systems 38 können sodann die Prüfschritte simuliert werden, wobei gemäß der Erfindung Wirk- und/oder Funktionsmechanismen in Form von physikalischen Größen wie Druckkräfte und Drehmomente der Funktionseinheiten simuliert werden. Die Ergebnisse der Simulation können mit der realen Welt verglichen werden. In Abhängigkeit des Vergleichs kann die Messrobotik geändert oder optimiert werden.

Durch die Simulation unter Einbeziehung der Wirk- und/oder Funktionsmechanismen können exakte Aussagen über den Messablauf und die Taktzeit getroffen werden. Ferner ist eine Kontrolle der realen Messwerte möglich.

Das Messrobotik-System mit Bauteil sowie die realen Messwerte können in Verbindung mit einer CAD/Augmented-Reality-App auf einem Display eines mobilen Gerätes 42 wie Tablet dargestellt und überprüft werden.

Mittels des funktionalen digitalen Modells (funktionale digitaler Zwilling) werden die realen Prüf- und Montageschritte in den virtuellen Raum transformiert, wodurch in der gesamten Wertschöpfungskette ein großes Potential an Zeit- und Kostenersparnis generiert wird. Dies gilt gleichermaßen auch für Erstausrüster (OEMs) und Zulieferer, beginnend in der Entwicklungsphase über die Qualitätsbewertung bis zum Auditierungsprozess.

Schließlich kann das funktionale digitale Modell 22 auch zur virtuellen Inbetriebnahme für Montageprozesse, insbesondere in der Produktion verwendet werden.

Ein weiteres großes Nutzungspotential bietet das funktionale digitale Modell 22 in der virtuellen, qualitätsgestützten Montage. So können Montageteile unter Berücksichtigung vordefinierter Wirk- und/oder Funktionsmechanismen, wie Fügekräfte, virtuell montiert und damit die Montagevorgänge lange vor der Verfügbarkeit realer Prototypenteile simuliert werden. Für den Fall einer Montage werden sowohl für das zu montierende Bauteil als auch für das Objekt, in welches das Bauteil montiert wird, ein funktionale digitales Modell erstellt, um diese im virtuellen Raum abbilden und simulieren zu können.

Bei der virtuellen Montage eines virtuellen Bauteils wie Rückleute oder Heckklappe in ein virtuelles Objekt wie Kraftfahrzeug können die Montageschritte im virtuellen Raum so angepasst werden, um eine optimale Einpassung des Bauteils in eine vorgegebene Aussparung zu ermöglichen. Auch können Bewegungen unter Berücksichtigung minimaler Montagekräfte und optimaler Spaltmaße optimiert werden. Das Bauteil kann z. B. im virtuellen Raum so lange gedreht werden, bis die Spaltmaße optimal sind. Die Bewegungen können sodann in das reale System übertragen und z. B. die Spaltmaße real gemessen werden. Sodann kann ein Vergleich zwischen realen und virtuellen Daten durchgeführt werden, um die Prozesse weiter zu optimieren. Allgemein besteht die Möglichkeit Abläufe im virtuellen Raum zu optimieren und entsprechende Daten in den realen Raum zu übertragen und umgekehrt.

## Patentansprüche

1. Verfahren zur Prüfung und/oder Montage zumindest eines Bauteils (10) und/oder zumindest einer Funktionseinheit (14, 16, 18) mit einem realen Roboter (40), wie Prüf- und/oder Montageroboter, anhand definierter Prüf- und/oder Montageschritte in einem realen Raum,
wobei für den Roboter (40) sowie das zumindest eine Bauteil (10) und/oder die zumindest eine Funktionseinheit (14, 16, 18) mittels einer Modellierungs- und/oder Simulationseinrichtung jeweils ein digitales Modell (22) erstellt wird,
wobei in dem digitalen Modell (22) des zumindest einen Bauteils (10) und/oder der zumindest einen Funktionseinheit (14, 16, 18) dem Bauteil und/oder der Funktionseinheit zugeordnete Prüf- und/oder Montageschritte berücksichtigt werden,
wobei die Prüf- und/oder Montageschritte durch einen virtuellen Roboter (36), wie Prüf- und/oder Montageroboter, an einem virtuellen Bauteil (42) und/oder einer virtuellen Funktionseinheit in einem virtuellen Raum (34) simuliert werden, derart, dass der Prüfablauf optimiert und die Taktzeit abgeschätzt werden, wobei nach Fertigstellung des Prüfablaufs die Simulation mittels eines Software-Tools in den realen Roboter (40) übertragen und von diesem in dem realen Raum automatisiert durchgeführt wird, wobei ein mathematisch physikalisches Verhaltensmodell (30) bei der Simulation der Prüf und/oder Montageschritte abgerufen wird,
**dadurch gekennzeichnet,**
**dass** in dem digitalen Modell (22) des zumindest einen Bauteils (10) und/oder der zumindest einen Funktionseinheit (14, 16, 18) für zumindest einen Prüf- und/oder Montageschritt das mathematisch physikalische Verhaltensmodell (30) berücksichtigt wird, durch das ein physikalisches und dynamisches Verhalten des zumindest einen Bauteils (10) und/oder der zumindest einen Funktionseinheit (14, 16, 18) bei Durchführung der Prüf- und/oder Montagschritte mittels zumindest einer mathematische Beziehung beschrieben wird und welches bei der Ausführung des Prüf- und/oder Montageschritts im realen Raum auftretende physikalische Wirk- und/oder Funktionsmechanismen in Form von Bedien- und/oder Montagekräften abbildet, wobei die mathematische Beziehung in Form einer Kurve oder Kennlinie (32) zumindest einer physikalischer Größe in Abhängigkeit einer weiteren Größe vorgegeben wird, wobei ein Verlauf der Kurve oder Kennlinie (32) mittels eines Kurven-Editors (32) eingestellt wird und wobei der Kurven-Editor bei der Simulation eines der Prüf- und/oder Montageschritte angezeigt wird und dass die Kurven mittels des Kurven-Editors iterativ angepasst werden und anschließend die Simulation neu gestartet wird.

2. Verfahren nach Anspruch 1,
**dadurch gekennzeichnet,**
**dass** die mathematische Beziehung mittels eines Translators in das mathematische Verhaltensmodell (30) transformiert und mittels eines Lösungsalgorithmus gelöst wird.

3. Verfahren nach Anspruch 1 oder 2,
**dadurch gekennzeichnet,**
**dass** die physikalische Größe eine Kraft oder ein Drehmoment ist und dass die weitere Größe ein Weg, Winkel oder eine Zeit ist und dass die Kurve oder Kennlinie (22) in Form einer Kraft-Weg-Kennlinie oder einer Drehmoment-Winkel-Kennlinie vorgegeben wird.

4. Verfahren nach einem der vorhergehenden Ansprüche,
**dadurch gekennzeichnet,**
**dass** das zumindest eine Bauteil (10) eine Komponente für den Einbau in ein Kraftfahrzeug ist, wie Bediengerät für eine Klimaanlage, Rücklicht oder Türe und dass die zumindest eine Funktionseinheit eine elektromechanische Komponente wie ein Taster, ein Drehknopf, ein Drehregler oder ein Schieberegler ist.

5. Verfahren nach Anspruch 1,
**dadurch gekennzeichnet,**
**dass** bei der Simulation der Montageschritte das physikalische und dynamische Verhalten des zumindest einen Bauteils (10) simuliert wird, insbesondere ein Verlauf von Füge- oder Montagekräften, die bei der Montage des Bauteils (10) in eine Aussparung auftreten und/oder dass bei der Simulation der Prüfschritte das physikalische dynamische Verhalten der zumindest einen Funktionseinheit bei Ausführung simuliert wird, insbesondere ein Kraftverlauf beim Drücken einer Taste, ein Drehmomentverlauf beim Drehen eines Drehkopfes oder eines Drehreglers.

6. Verfahren nach einem der vorhergehenden Ansprüche,
**dadurch gekennzeichnet,**
**dass** das physikalisch dynamische Verhalten des zumindest einen Bauteils (10) und/oder der zumindest einen Funktionseinheit (14, 16, 18) mittels des realen Roboters (40) real gemessen wird und dass die real gemessenen Werte in dem mathematischen Verhaltensmodell (30) berücksichtigt, wie eingespeist, werden.

7. Verfahren nach einem der vorhergehenden Ansprüche,
**dadurch gekennzeichnet,**
**dass** die im virtuellen Raum (34) generierten und optimierten Prüf- und/oder Montageschritte in den realen Raum übertragen werden und dass real abgeleitete Daten, Qualitätsergebnisse, Fehler und/oder Wartungsmeldungen in dem funktionalen digitalen Modell (22) evaluiert werden.

8. Verfahren nach einem der vorhergehenden Ansprüche,
**dadurch gekennzeichnet,**
**dass** das funktionale digitale Modell (22) des Bauteils (10) und/oder der Funktionseinheit (14, 16, 18) aus Daten eines CAD-Modells, Daten eines kinematischen Simulationsmodells und Daten der mathematischen Verhaltensmodelle (30) der Komponenten der Prüf- und/oder Montageschritte erstellt wird.

9. System, angepasst zur Durchführung des Verfahrens nach einem der Ansprüche 1-8, mit einem Prüf- und/oder Montageroboter (40), mit wenigstens einer Prüf- und/oder Mess-Sensorik und/oder einer Greif- und/oder Montageeinrichtung, einem Steuergerät zur Steuerung des Prüf- und/oder Montageroboters (40) zur Durchführung der Prüf- und/oder Montageschritte in einem realen Raum sowie gegebenenfalls einer Schnittstelleneinheit zur Kopplung mit dem vorzugsweise von einer Modellierungs- und/oder Simulationseinrichtung erzeugten virtuellen Raum (34).

## Claims

1. A method for testing and/or assembling at least one component (10) and/or at least one functional unit (14, 16, 18) with a real robot (40), such as a testing and/or assembly robot, on the basis of defined testing and/or assembly steps in a real space,
wherein a digital model (22) is created for the robot (40) and each of at least one component (10) and/or at least one functional unit (14, 16, 18) by means of a modelling and/or simulation device
wherein testing and/or assembly steps associated with the component and/or the functional unit are taken into account in the digital model (22) of at the least one component (10) and/or the at least one functional unit (14, 16, 18),
wherein the testing and/or assembly steps are simulated by a virtual robot (36), such as a testing and/or assembly robot, on a virtual component (42) and/or a virtual functional unit in a virtual space (34) in such a way that the testing sequence is optimised and the cycle time is estimated, wherein, after completion of the testing sequence, the simulation is transferred to the real robot (40) by means of a software tool and is carried out automatically by the latter in the real space,
wherein a mathematical-physical behaviour model (30) is retrieved during the simulation of the testing and/or assembly steps,
**characterised in that**
**in that** the mathematical-physical behaviour model (30) is taken into account in the digital model (22) of the at least one component (10) and/or of the at least one functional unit (14, 16, 18) for at least one testing and/or assembly step, by means of which mathematical-physical model a physical and dynamic behaviour of the at least one component (10) and/or of the at least one functional unit (14, 16, 18) during the execution of the testing and/or assembly steps is described by means of at least one mathematical relationship and which maps physical action and/or functional mechanisms occurring during the execution of the testing and/or assembly step in real space in the form of operating and/or assembly forces, wherein the mathematical relationship is specified in the form of a curve or characteristic (32) of at least one physical variable as a function of a further variable, wherein a path of the curve or characteristic (32) is set by means of a curve editor (32) and wherein the curve editor is displayed during the simulation of one of the testing and/or assembly steps, and **in that** the curves are iteratively adapted by means of the curve editor and the simulation is then restarted.

2. The method according to claim 1,
**characterised in that**
**in that** the mathematical relationship is transformed into the mathematical behaviour model (30) by means of a translator and is solved by means of a solution algorithm.

3. The method according to claim 1 or 2,
**characterised in that**
**in that** the physical variable is a force or a torque and **in that** the further variable is a distance, angle or time, and **in that** the curve or characteristic (22) is specified in the form of a force-distance characteristic or a torque-angle characteristic.

4. The method according to any of the preceding claims,
**characterised in that**
**in that** the at least one component (10) is a component for installation in a motor vehicle, such as an operating device for an air-conditioning system, rear light or door, and **in that** the at least one functional unit is an electromechanical component such as a button, a rotary knob, a rotary control or a slider.

5. The method according to claim 1,
**characterised in that**
**in that**, during the simulation of the assembly steps, the physical and dynamic behaviour of the at least one component (10) is simulated, in particular a progression of joining or assembly forces which occur during the assembly of the component (10) into a recess and/or **in that**, during the simulation of the testing steps, the physical-dynamic behaviour of the at least one functional unit is simulated during execution, in particular a force progression when pressing a button, a torque progression when turning a rotary knob or a rotary control.

6. The method according to any of the preceding claims,
**characterised in that**
**in that** the physical-dynamic behaviour of the at least one component (10) and/or of the at least one functional unit (14, 16, 18) is measured in real terms by means of the real robot (40), and **in that** the values measured in real terms are taken into account, such as input, in the mathematical behaviour model (30).

7. The method according to any of the preceding claims,
**characterised in that**
**in that** the testing and/or assembly steps generated and optimised in the virtual space (34) are transferred to the real space and **in that** real derived data, quality results, errors and/or maintenance messages are evaluated in the functional digital model (22).

8. The method according to any of the preceding claims,
**characterised in that**
**in that** the functional digital model (22) of the component (10) and/or of the functional unit (14, 16, 18) is created from data of a CAD model, data of a kinematic simulation model and data of the mathematical behaviour models (30) of the components of the testing and/or assembly steps.

9. System adapted to carry out the method according to any of claims 1-8 with a testing and/or assembly robot (40), with at least one testing and/or measuring sensor system and/or a gripping and/or assembly device, a control device for controlling the testing and/or assembly robot (40) for carrying out the testing and/or assembly steps in a real space as well as optionally an interface unit for coupling with the virtual space (34) preferably generated by a modelling and/or simulation device.

## Revendications

1. Procédé d'essai et/ou de montage d'au moins un composant (10) et/ou d'au moins une unité fonctionnelle (14, 16, 18) avec un robot réel (40), tel que robot d'essai et/ou de montage, à l'aide d'opérations d'essai et/ou de montage définies dans un espace réel, sachant qu'un modèle numérique (22) est créé respectivement pour le robot (40) ainsi que pour ledit au moins un composant (10) et/ou ladite au moins une unité fonctionnelle (14, 16, 18) au moyen d'un dispositif de modélisation et/ou de simulation,
sachant que dans le modèle numérique (22) dudit au moins un composant (10) et/ou de ladite au moins une unité fonctionnelle (14, 16, 18) sont considérées des opérations d'essai et/ou de montage attribuées au composant et/ou à l'unité fonctionnelle,
sachant que les opérations d'essai et/ou de montage sont simulées par un robot virtuel (36), tel que robot d'essai et/ou de montage, sur un composant virtuel (42) et/ou une unité fonctionnelle dans un espace virtuel (34) de sorte que le déroulement de l'essai est optimisé et la cadence estimée, sachant qu'une fois que le déroulement de l'essai est achevé, la simulation est transférée dans le robot réel (40) au moyen d'un outil logiciel et exécutée automatiquement dans l'espace réel,
sachant qu'un modèle de comportement physico-mathématique (30) est interrogé lors de la simulation des opérations d'essai et/ou de montage,
**caractérisé en ce**
**que** dans le modèle numérique (22) dudit au moins un composant (10) et/ou de ladite au moins une unité fonctionnelle (14, 16, 18) est pris en considération, pour au moins une opération d'essai et/ou de montage, le modèle de comportement physico-mathématique (30) par le biais duquel un comportement physique et dynamique dudit au moins un composant (10) et/ou de ladite au moins une unité fonctionnelle (14, 16, 18) lors de l'exécution des opérations d'essai et/ou de montage est décrit au moyen d'au moins une relation mathématique et qui représente sous forme de forces de commande et/ou de montage, les mécanismes physiques d'action et/ou de fonction se produisant dans l'espace réel lors de l'exécution de l'opération d'essai et/ou de montage, sachant que la relation mathématique est prédéfinie sous la forme d'une courbe ou ligne caractéristique (32) d'au moins une grandeur physique en fonction d'une autre grandeur, sachant qu'un tracé de la courbe ou ligne caractéristique (32) est réglé au moyen d'un éditeur de courbes (32) et sachant que l'éditeur de courbes est affiché lors de la simulation d'une des opérations d'essai et/ou de montage et que les courbes sont adaptées de manière itérative au moyen de l'éditeur de courbes, et que la simulation est redémarrée ensuite.

2. Procédé selon la revendication 1,
**caractérisé en ce**
**que** la relation mathématique est convertie en modèle de comportement mathématique (30) au moyen d'un convertisseur et au moyen d'un algorithme de résolution.

3. Procédé selon la revendication 1 ou 2,
**caractérisé en ce**
**que** la grandeur physique est une force ou un couple et que l'autre grandeur est une course, un angle ou une durée et que la courbe ou ligne caractéristique (22) est prédéfinie sous la forme d'une ligne caractéristique force-course ou d'une ligne caractéristique couple-angle.

4. Procédé selon l'une des revendications précédentes,
**caractérisé en ce**
**que** ledit au moins un composant (10) est un composant pour le montage dans un véhicule motorisé, tel qu'un organe de commande pour un système de climatisation, un feu arrière ou une porte et que ladite au moins une unité fonctionnelle est un composant électromécanique tel qu'un bouton-poussoir, un bouton rotatif, un régulateur rotatif ou un curseur de réglage.

5. Procédé selon la revendication 1,
**caractérisé en ce**
**que** lors de la simulation des opérations de montage, le comportement physique et dynamique dudit au moins un composant (10) est simulé, notamment un déroulement des forces d'assemblage ou de montage qui apparaissent lors du montage du composant (10) dans un évidement et/ou que lors de la simulation des opérations d'essai, le comportement dynamique physique de ladite au moins une unité fonctionnelle lors de l'exécution est simulé, notamment une variation des forces lors de l'appui d'une touche, une variation du couple lors de la rotation d'un bouton rotatif ou d'un régulateur rotatif.

6. Procédé selon l'une des revendications précédentes,
**caractérisé en ce**
**que** le comportement physico-dynamique dudit au moins un composant (10) et/ou de ladite au moins une unité fonctionnelle (14, 16, 18) est mesuré réellement au moyen du robot réel (40) et que les valeurs réellement mesurées sont prises en considération, telles qu'introduites dans le modèle de comportement mathématique (30).

7. Procédé selon l'une des revendications précédentes,
**caractérisé en ce**
**que** les opérations d'essai et/ou de montage optimisées et générées dans l'espace virtuel (34) son transférées à l'espace réel et que les données, résultats de qualité, erreurs et/ou messages de maintenance réellement déduits sont évalués dans le modèle (22) fonctionnel, numérique.

8. Procédé selon l'une des revendications précédentes,
**caractérisé en ce**
**que** le modèle fonctionnel numérique (22) du composant (10) et/ou de l'unité fonctionnelle (14, 16, 18) est créé à partir de données d'un modèle CAO, données d'un modèle de simulation cinématique et données des modèles de comportement mathématiques (30) des composants des opérations d'essai et/ou de montage.

9. Système, adapté pour l'exécution du procédé selon l'une des revendications 1-8 avec un robot d'essai et/ou de montage (40), avec au moins des capteurs d'essai et/ou de mesure et/ou un dispositif de préhension et/ou de montage, un appareil de commande pour commander le robot d'essai et/ou de montage (40) pour exécuter les opérations d'essai et/ou de montage dans un espace réel et avec, le cas échéant, une unité d'interface pour un couplage avec l'espace virtuel (34) créé de préférence par un dispositif de modélisation et/ou de simulation.
